(19) Europäisches Patentamt
European Patent Office
Office européen des brevets

(11) **EP 1 641 338 B1**

(12) **EUROPEAN PATENT SPECIFICATION**

(45) Date of publication and mention
of the grant of the patent:
**09.01.2008 Bulletin 2008/02**

(51) Int Cl.:
***A01K 11/00*** (2006.01)

(21) Application number: **04739860.7**

(22) Date of filing: **14.06.2004**

(86) International application number:
**PCT/EP2004/006377**

(87) International publication number:
**WO 2005/002329 (13.01.2005 Gazette 2005/02)**

(54) **CAPSULE FOR THE ELECTRONIC IDENTIFICATION OF RUMINANTS OF ANY WEIGHT AND AGE**

KAPSEL ZUR ELEKTRONISCHEN IDENTIFIZIERUNG VON WIEDERKÄUERN BELIEBIGEN GEWICHTS ODER ALTERS

CAPSULE DESTINEE A L'IDENTIFICATION ELECTRONIQUE DE RUMINANTS D'AGE ET POIDS QUELCONQUES

(84) Designated Contracting States:
**AT BE BG CH CY CZ DE DK EE ES FI FR GB GR HU IE IT LI LU MC NL PL PT RO SE SI SK TR**

(30) Priority: **03.07.2003 ES 200301551**

(43) Date of publication of application:
**05.04.2006 Bulletin 2006/14**

(73) Proprietor: **Rumitag, S.L.**
**08950 Barcelona (ES)**

(72) Inventors:
• **CAJA LOPEZ, Gerardo**
**E-08190 Sant Cugat del Valles (ES)**
• **GHIRARDI QUINODOZ, Juan, José**
**E-08860 Castelldefels (ES)**
• **GARIN DE NARDO, Daniel**
**11600 Montevideo (UY)**
• **VILASECA VINTRO, Joan, Francesc**
**08950 ESPLUGUES DE LLOBREGAT (ES)**

(74) Representative: **SUGRANES - VERDONCES - FERREGÜELA**
**304 Calle Provenza**
**08008 Barcelona (ES)**

(56) References cited:
US-A- 5 482 008     US-A- 5 937 789
US-A- 5 963 132     US-A1- 2001 001 176

**Description**

Technical field of the invention

The present invention relates to ruminal capsules, or boluses, for the electronic identification of ruminants, specially designed to be administered orally to animals of any age or size and to maximize their location in the ruminants' second stomach, called the reticulum or reticulo-rumen. The capsules are made up of a body of inert material which is resistant to the digestive processes and secretions of the ruminants' pre-stomachs, said body being provided with a cavity adapted for containing an electronic device for exchanging data by radio-frequency (transponder). The use of this type of capsule, or bolus, under the conditions of the present patent, does not involve any problem or harm to the health, behaviour and well-being of the animals to which it is applied.

Background of the invention

A capsule for the identification and control of ruminants generically comprises a body or matrix of inert material, which is heavy and resistant to the corrosive conditions of the ruminants' pre-stomachs (moisture, pH between 4-8, strongly reducing anaerobic environment, intense microbial activity, the action of proteolytic and fibrolytic enzymes,...) wherein an electronic device is implanted that is capable of storing any type of information relating to the animal (identification number, productive characteristics, activities and behaviour,...) and passing on said information to a receiving system by means of electromagnetic waves.

The electronic identification of animals is of great importance nowadays in order to comply with the traceability requirements demanded for animals and meat in international exchanges. Therefore, the European Commission has proposed the need to decide in the next few years, in the light of the technical and standardization progress made on the use of electronic identification as an official identification system in ruminants (EEC Regulation 1760/2000 for bovines and Regulation Proposal COM-2002-729 for sheep and goats, currently at the discussion stage).

In this context, it is of particular importance that the electronic identification devices to be used in practice should be capable of:

1) Being applied at very early ages, as near as possible to birth, and at any rate, prior to the animals' weaning (when the bond between the mothers and their young is broken, and their affiliation is lost),
2) Keeping it permanently in the animal in order to obtain a single identification throughout its productive life,
3) Locating it in a fixed, and previously known, position in the animal's body in order to make possible a quick and easy reading of the identification devices in live animals, whether in static conditions (immobilized animals) or dynamic (animals in movement), as well as their easy and quick recovery after the death or slaughter of the animal in the abattoir.

These objectives are not fulfilled, in their totality and simultaneously, by the currently available identification devices. Recently, the ICAR (International Committee for Animal Recording) or the international committee for the identification and control of animal productions, has published a procedural guide in which a retention of over 98% is required for the approval of the use of any type of device as an official method of identification.

Several previous studies made by the authors of this invention patent, such as those referred to by Caja et al. (1998; Final Project Report AIR3-2304, Brussels), Caja et al. (1999; Comp. Elec. Agric. 24:45-63), Garin (2002, Doctoral Thesis, Universidad Autónoma of Barcelona), Garin et al. (2002; J. Animal. Sci. 81:879-884) and Ghirardi (2003; Tesis de Magister, Universidad Autónoma of Barcelona), show the benefit of the identification capsules, or boluses, being located preferably in the reticulum, or ruminants' second stomach, for which numerous trials have been carried out in order to determine the physical characteristics and optimum size of the capsules to be administered orally in different species of ruminants. In this position, the use of different boluses of different characteristics is harmless for the animal, both in young animals (Garin et al., 2002) and adults (Caja et al., 1999).

One of the most important physical parameters which conditions that the percentage of permanence of a capsule, or bolus, in the reticulo-rumen is high, is the specific gravity of the capsule. The specific gravity is defined as the ratio existing between the weight of an object and the weight of its own volume of distilled water. As Fallon has recently concluded (2002; Rev. Sci. Tech. Off. Int. Epizoot. 20:480-490), for a capsule to be retained in ruminants, its specific gravity value must be over 2.

Several patent documents exist, such as EP0480530 and ES2089556, where capsules manufactured with materials based on silicon oxides (glass and ceramic) with a specific gravity situated around 2 but which either do not achieve a satisfactory retention in the reticulo-rumen of the animal (>98%) or need to be manufactured with relatively large dimensions, which makes their application impossible in young animals or those weighing less than 30 kg.

Other patents have capsules provided with metal masses which are aimed at increasing their specific gravity and achieving a vertical position of the device in the rumen to improve their likelihood of a reading. Thus, the patent document AU 649212 presents an electronic device situated inside a porcelain body, which can be filled with liquid and equipped with a magnetic block, whose purpose is also to ease its recovery during the slaughter and processing of the carcass in the abattoir. Nevertheless, apart from their large size, the drawback of these types of bolus is the presence of a metal body, causing interference in the reception and transmission of the radio-frequency electromagnetic waves, which reduces their likelihood of a reading.

In order to avoid these drawbacks, other types of capsule or ruminal bolus have been devised, such as that disclosed in the patents ES 2140237, whose body is made with an aluminum-based material (aluminum oxide, $Al_2O_3$) of a high specific gravity and transparent to electromagnetic radiation, which present an inner cavity for positioning the identification transponder. The specific gravity of said material is over 2.5, which ensures a more precise location of the capsule in the ruminants' second pre-stomach. Furthermore, said capsule does not contain magnetic or metal elements that interfere in the detection or transmission of data by electromagnetic waves.

However, another of the main problems observed in practice when identifying ruminants with electronic boluses is the size thereof, since in order to avoid their expulsion by regurgitation, the capsule needs to attain a high weight. In the previous work carried out by the authors of this patent with different types of bolus and productive situations, the retention of the boluses is effective (100%) in bovine livestock when the bolus weighs more than 50-80 g, as indicated by Ghirardi et al. (2003; ITEA: Prod. Animal, volume extra 24, 85-87). This is only achieved, given the specific gravity of the materials used in the patents referred to earlier (2 to 2.5), with medium-sized or large boluses (65-110 cm long and 1.8-2.5 cm in diameter), which makes swallowing by young or small-sized animals impossible, as is the case with some newborn bovines or in fully grown ones of specific indigenous breeds. In practice, it is recommended that the boluses should not be applied before 25-30 kg of live weight (Caja et al., 1999) and, for greater safety, not before 50 kg in bovines. Early identification with this type of bolus is obviously impossible in the case of lambs and kid goats, whose average weight at birth is between 2 and 4 kg, generally reaching 25-30 kg from 3-6 months of age. In these cases, swallowing is only possible when the dimensions of the boluses are very reduced, which is not possible with identification devices manufactured in accordance with the aforementioned patents.

Other aspects also exist which, although they have not been studied in depth, are also important for ensuring the permanence of a capsule in an animal's rumen. The authors of the present invention patent have determined that the so-called 'effective weight', and the capsule dimensions, are also particularly critical to avoid the regurgitation of the capsules and to guarantee their permanence in the reticulo-rumen.

The 'effective weight' of a rumen capsule is thus defined as the difference between the total weight of the capsule and its flotation strength, determined by its volume in water. The use of the effective weight eliminates the flotation effects observed in some capsules, such as those described in patent documents ES2089556, EP0480530, AU649212 and ES2140237, which contain a large inner cavity that tries to be neutralised by means of a metal ballast and in which, as a consequence, the total weight, or the specific gravity, are not in themselves a suitable criterion for guaranteeing their retention in the reticulo-rumen, as has been mentioned previously.

What should also be taken into account, as has been pointed out by Garin et al. (2002) and Ghirardi (2003), is that there is the possibility that, by reducing the size of the capsule, the latter can pass to subsequent sections of the digestive apparatus and get lost through the intestinal tract with the animal's faeces. It is of interest therefore, and in a special way when small boluses are used, that the capsule stays in the reticulo-rumen and does not pass through the reticulo-omasal orifice towards the omasum and abomasums, the third and fourth stomach, respectively, of ruminants, which would result in the loss of the animal's identification.

In this sense, the investigations carried out by the authors of the present patent make it clear that when the length of the capsule increases the chances of passing through the reticulo-omasal orifice are reduced, regardless of whether its diameter is less than that of the reticulo-omasal orifice. The reticulo-omasal orifice has a diameter, as estimated by Ghirardi (2002), which varies between 1.4-2.0cm for sheep and goats, and between 2.5-3.5 cm for bovines, which is greater than the diameter of the boluses that are retained efficiently (100%) and demonstrate that other factors are determining in the filtering capacity of the reticulo-omasal orifice. Therefore, the length of the capsule, more than the weight itself, is a critical factor for controlling it as it passes through the reticulo-omasal orifice and the resulting movement towards subsequent sections of the digestive system.

The capsule for the electronic identification of ruminants object of the invention, presents solutions to previously posed problems.

Explanation of the invention

As a result of the previous studies made and the experimental tests carried out to determine the laws explaining the retention of capsules or boluses in the reticulo-rumen of different species of ruminant, a new design and material for the manufacture of capsules for use in the identification of ruminants is presented herein which resolves the problems of application and retention mentioned earlier, being applicable, according to different variations of the invention, to animals of different ages and sizes.

The capsule for the electronic identification of ruminants object of the present invention, is characterised in that the ceramic material which constitutes the capsule body comprises a derivative of a non-ferrous element with a density equal to or greater than 4.0 g/cm$^3$; the specific gravity of the body is equal to or greater than 3.0; the capsule has a total weight comprised between 8 g and 90 g; the effective weight of the capsule is comprised between 5 and 85 g; and shaped like a cylinder with slightly rounded edges, a length of between 30 mm and 95 mm and with a diameter of between 8 mm and 25 mm.

According to another characteristic of the invention, the ceramic material of the capsule body comprises zirconium oxide (ZrO2).

According to another characteristic of the invention, the composition in zirconium oxide is comprised between 30% and 80% by weight; and its specific gravity comprised between 3.5-4.0.

Another outstanding aspect of the capsule for ruminants object of the invention, is that the ceramic material comprises one or more of the following components: silicon oxide from 17-50% by weight; magnesium oxide from 0.02-0.05% by weight; aluminum oxide from 3-6% by weight; calcium oxide from 1.20-2.60%; potassium oxide from 0.12-0.40% by weight; titanium oxide from 1.00-3.20% by weight; sodium oxide from 0.01-0.03% by weight; iron oxide from 0.02-0.15% by weight; and phosphoric oxide 0.01-0.03% by weight.

The capsule for the identification of ruminants according to the invention, is also characterised in that the ratio between the length and the diameter of the capsule is comprised between 3-6 and preferably takes a value close to 4.5.

The capsule for ruminant animals weighing less than approximately 25 kg, is characterised in that the length of the body is comprised between 35 mm and 75 mm, the diameter is comprised between 8 mm and 15 mm; the total weight is comprised between 8 g and 50 g; and the effective weight is comprised between 5g and 45 g.

The capsule for the identification of ruminants weighing over approximately 25 kg, is characterised in that the length of the body is comprised between 50 mm and 110 mm, the diameter is comprised between 12 mm and 25 mm; the total weight is comprised between 40 g and 90 g; and the effective weight is comprised between 35 g and 85 g.

The capsule object of the present invention is also characterised in that it is fitted with an elastic element, arranged in at least one of the rounded ends of the body and secured by a bracket of biodegradable material.

Brief description of the drawings

Capsules for the identification of ruminants in accordance with the object of the present invention are represented in the attached drawings by way of non-limiting example. In said drawings:

Fig. 1    is a diagrammatic view of a capsule for the electronic identification of ruminants wherein the different parts from which it is constituted can be appreciated;
Fig. 2    corresponds to another diagrammatic view of the capsule according to the invention, fitted with an elastic element and a bracket;
Fig. 3    shows the capsule according to the invention with a cover;
Fig. 4    is a diagrammatic view of the capsule object of the invention fitted with an elastic element in folded position; and
Fig. 5    corresponds to a capsule according to Fig. 4 but with the elastic element in extended position.

Detailed description of the invention

In said drawings it can be appreciated that a capsule 1 adapted to be administered orally, comprises a body 2 of ceramic material, which is provided with a cavity 3 to enclose a data exchange device 4, and which is subsequently closed with degradation-resistant cement or silicone in the ruminants' stomachs.

An example of the composition of the said ceramic material which constitutes the body 2 of the capsule 1 is detailed in the enclosed Table

Table

| Component | Percentage by weight (%) |
|---|---|
| SiO$_2$ | 33.48 |
| MgO | 0.03 |
| Al2O3 | 3.81 |
| CaO | 1.73 |
| K2O | 0.23 |

(continued)

| Component | Percentage by weight (%) |
|---|---|
| TiO2 | 2.10 |
| $NaO_2$ | 0.01 |
| ZrO2 | 57.55 |
| $Fe_2O_3$ | 0.08 |
| $P_2O_5$ | 0.01 |
| Others | 0.95 |

The composition described in the Table is applicable for the manufacture of bodies 2 of ceramic material of dimensions ranging between 30 mm and 110 mm for the length of the body 2 and between 8 mm and 25 mm for its diameter.

In a preferred embodiment, the capsule 1 according to the invention, made up of a body 2 with the composition described in Table 1 and applicable to animals weighing less than 25 kg, has a total weight comprised between 8 grams and 50 grams, a diameter of 10 mm and a length of 50 mm. Said capsule 1, is basically employed for the identification of bovine livestock.

The same composition is applicable to capsules 1 for animals weighing more than 25 kg, in this case the preferred embodiment being a capsule 1 with a weight comprised between 40 and 90, a diameter of 18 mm and a length of 72 mm.

Both types of capsules 1, whether those applicable to animals of a reduced size (sheep, goats, young bovines, etc.), as well as those applicable to animals of greater weight and size (bovines, cervids, etc), possess a specific gravity of over 3. To be exact, given that the zirconium oxide composition is comprised between 30% and 80% by weight (57.55%), the specific gravity will be comprised between 3.5 and 4.0.

The total weight of the capsule 1 should be high enough for the animal not to regurgitate it, but in turn, it should be borne in mind that high weight facilitates the passage thereof towards subsequent sections of the digestive apparatus, with the capsule being lost through defecation. With the combination of the values of total and effective weight, dimensions, composition and specific weight characteristic of the invention, a suitable weight of the capsule 1 is achieved in order that it is not regurgitated, and in turn, and as the dimensions favour its remaining in the rumen or second stomach of the animal, its passing through to subsequent sections of the digestive apparatus is prevented.

The capsules 1 described, with a body 2 of ceramic material made up of a composition that comprises zirconium oxide in a proportion by weight of 30% to 80%, comprise relatively low proportions by weight of iron oxide, aimed at minimizing the interference with the data exchange device 4. This effect is important because the composition of the capsule 2 can conceal the data received from the data exchanger 4, or alter the signal emitted in order to make the reading of said device 4. Components such as silicon oxide, in a weight proportion from 17% to 50 %; magnesium oxide from 0.02% to 0.05% by weight; aluminum oxide from 3% to 6% by weight; calcium oxide from 1.20% to 2.60%; potassium oxide from 0.12% to 0.40% by weight; titanium oxide from 1.00% to 3.20% by weight; sodium oxide from 0.01 % to 0.03% by weight; iron oxide from 0.02% to 0.15% by weight; and phosphoric oxide from 0.01 % to 0.03% by weight, are components that do not interfere with the electromagnetic radiation employed for the reading of the data exchange device 4.

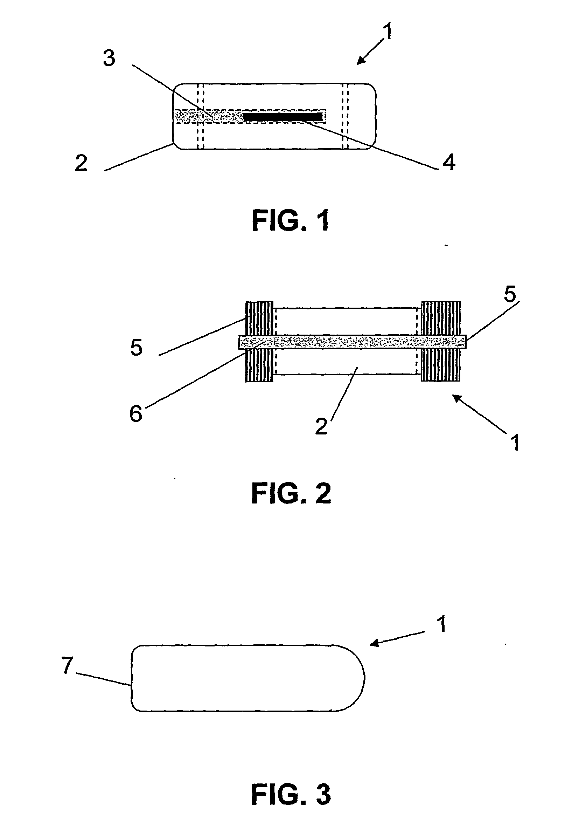

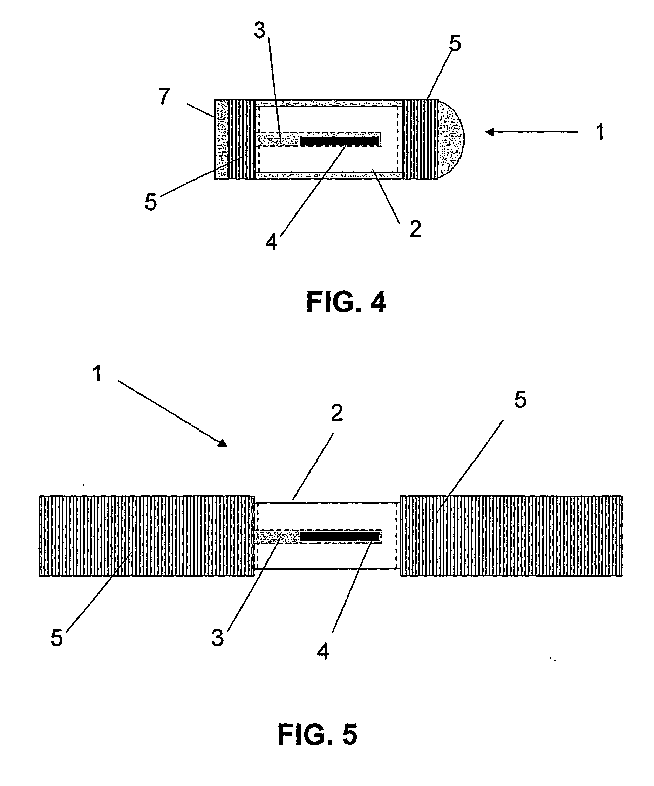

In accordance with Figs. 2 to 5, a preferred embodiment of the invention consists of a capsule 1, fitted with an elastic element 5, such as a spring or elastic band, arranged in at least one of the rounded ends of the body 2 and secured by means of a drill or transverse groove. A bracket 6 of biodegradable material is arranged securing the elastic element 5, so that it keeps it in its folded position. An embodiment of this type is particularly designed in order to increase the retention of the capsules 1 in breeds or species of animals that are difficult to identify, wherein a great facility for the regurgitation or movement towards subsequent sections of the digestive apparatus has been observed, such as some breeds of goats and certain species of wild ruminants. It is also particularly applicable to animals that need to be identified at a very early age and/or with a very reduced weight, such as animals which are premature, of retarded growth or sick. In the case represented in Fig. 2, the elastic element 5 is a spring arranged at both ends of the body 2, although any material with elastic properties would also be applicable. Thus, metal or plastic springs can be used without going outside the object of the invention. By means of a bracket 6, the elastic element 5 is secured in its folded position. Alternatively, in Fig. 5 it can be appreciated that the spring is arranged in its outstretched position. With the elastic element 5, increasing the size or dimensions of the capsule 1 can be achieved, without reducing the specific gravity and/or effective weight once the latter is inside the animals' reticulo-rumen.

The bracket 6 is formed from biodegradable material, so that it is digested inside the animal's digestive apparatus, allowing the stretching out of the elastic element 5. As biodegradable material, any cellulose compound is used, such as cotton or cellulose; any amylaceous compound, such as starch; any proteinaceous compound, such as gelatine, animal fibres or fibrous proteins; or any degradable synthetic polymer in the physicochemical conditions of the animal's rumen.

In order to ease the application of the capsules 1 fitted with an elastic element 5, it has been envisaged that the unit be covered by a cover 7, cylindrically shaped and with slightly rounded edges, as can be appreciated in Fig. 3, where the cover 7 shows one of the rounded edges. In order to illustrate in detail the arrangement of the body 2 and the elastic elements 5 inside the cover 7, Fig. 4 has been represented, which corresponds to a longitudinal cut of the capsule in Fig. 3.

The capsule 1 is applicable to ruminants of different species, ages and weights, according to the different variants envisaged and provide an answer to the current problems by which it is impossible to identify young animals with a small bolus that is subsequently retained when these animals grow and reach adult age, wherein they may have increased their weight by between 10 and 20 times since birth. More specifically, the invention is applicable, although not in an exclusive way, to domestic ruminants (cows, sheep and goats), whether stabled or in pasture, and to wild ruminants or farmed for hunting (deer, roe deer, fallow deer, mouflons, mountain goats,...) whether wandering freely or in captivity, in order to obtain their identification and control at an early age and in a way that is compatible with good animal welfare and management practice.

The capsule 1 described, has been tried out on ruminants of various ages and sizes and no cases with problems of hypersensitivity, ulceration or alterations of the animal's behaviour have been detected. Said capsule 1, has been applied to animals only a few days old and neither swallowing problems nor losses during the animal's life have been observed, thus allowing for a more accurate control thereof from the first days of life, which if extrapolated to the entire stock of a cattle farm or grazing farm, significantly improves their control and management.

From the available data and that obtained in several complementary trials carried out by the authors of the present patent, some of the laws which list the dimensions of the boluses and their retention in calves for fattening up have been determined. Therefore, the retention of the identification devices (RID, %) can be explained by means of equations obtained from non-linear type adjustments (polynomic and exponential models) of the data obtained with the corresponding dimensions of the boluses:

1) Total weight (TW, g)

2.1) polynomic model:

$$RID\ (\%) = -0.023 \times TW^2 + 2.933 \times TW + 5.656\ ;\ r^2 = 0.849$$

2.1) Exponential Model:

$$RID\ (\%) = 98,853\ (1 - e^{-0.069\ TW})\ ;\ r^2 = 0.876$$

2) Specific gravity (SG)

2.1) polynomic model:

$$RID\ (\%) = -7.841 \times SG^2 + 56.933 \times SG - 6.613\ ;\ r^2 = 0.894$$

2.2) Exponential model:

$$RID\ (\%) = 126.331\ (1 - e^{-0.434\ SG})\ ,\ r^2 = 0.881$$

3) Effective weight (EW, g):

3.1) Polynomic model:

$$RID\ (\%) = -0.025 \times SG^2 + 2.352 \times SG + 43.467\ ;\ r^2 = 0.968$$

3.2)Exponential model:

$$RID\ (\%) = 99.270\ (1 - e^{-0.0997\ EW}),\ r^2 = 0.927$$

Said equations make it possible to estimate the retention percentage expected in the reticulo-rumen of bovines from the dimensions of capsule 1, which make it possible to determine a priori the optimum dimensions of a capsule 1 to be used in practice. The retention studies show maximum values for a total weight of 65 g, a value of 3.6 for specific gravity and a value of 48 g for the effective weight, as well as a plateau close to 100% of RID, from 80 g of total weight, 3.9 of specific gravity and 55 g of effective weight.

**Claims**

1. Capsule (1) for the electronic identification of ruminants, adapted to be administered orally and to be housed in the animal's second stomach (reticulum or reticulo-rumen), said capsule comprising a body (2), of ceramic material resistant to the animal's gastric juices and provided with a cavity (3) to enclose a data exchange device (4), **characterised in that**:

    - the ceramic material of the capsule body comprises a compound of a non-ferrous element of a density equal to or over 4 g/cm$^3$;
    - the specific gravity of said body is equal to or greater than 3;
    - the total weight of the capsule is comprised between 8 g and 90 g;
    - the effective weight of the capsule between 5 g and 85 g; and
    - the capsule is oblong-shaped, cylinder-like with slightly rounded edges with a diameter comprised between 8 mm and 25 mm and a length comprised between 30 mm and 110 mm.

2. Capsule (1) according to claim 1, **characterised in that** the ceramic material of the body (2) comprises zirconium oxide (ZrO2);

3. Capsule (1) according to claims 1 and 2, **characterised in that** the composition in zirconium oxide is comprised between 30% and 80% by weight, and the specific weight between 3.5-4.0.

4. Capsule (1) according to any of the preceding claims, **characterised in that** the ceramic material that constitutes the body (2) comprises one or more of the following components: silicon oxide from 17-50% by weight; magnesium oxide from 0.02-0.05% by weight; aluminum oxide from 3-6% by weight; calcium oxide from 1.20-2.60%; potassium oxide from 0.12-0.40% by weight; titanium oxide from 1.00-3.20% by weight; sodium oxide from 0.01-0.03% by weight; iron oxide from 0.02-0.15% by weight; and phosphoric oxide 0.01-0.03% by weight.

5. Capsule (1) according to claim 1, **characterised in that** the ratio between the length and diameter of the capsule is comprised between 3-6 and preferably in a value close to 4.5.

6. Capsule (1) according to any of the preceding claims 1 to 5, for ruminant animals weighing over approximately 25 kg, **characterised in that** the length of the body (2) is comprised between 50 mm and 110 mm, the diameter between 12 mm and 25 mm; the total weight between 40 g and 90 g; and the effective weight between 35 g and 85 g.

7. Capsule (1) according to any of the preceding claims 1 to 5, for ruminant animals weighing under approximately 25 kg, **characterised in that** the length of the body (2) is comprised between 35 mm and 75 mm, the diameter comprised between 8 mm and 15 mm; the total weight is comprised between 8 g and 50 g; and the effective weight is comprised between 5 g and 45 g.

8. Capsule (1) according to any of the preceding claims, **characterised in that** it is fitted with an elastic element (5), arranged in at least one of the rounded ends of the body (2) and secured by a bracket (6) of biodegradable material.

**Patentansprüche**

1. Kapsel (1) für die elektronische Identifizierung von Wiederkäuern, die ausgelegt ist, um oral verabreicht und in den zweiten Magen des Tiers (Reticulum oder Reticulo-Pansen) eingelagert zu werden, wobei die Kapsel einen Körper (2) aus einem Keramikmaterial umfasst, das gegenüber den Magensäften des Tiers beständig ist, und mit einem Hohlraum (3) versehen ist, um eine Datenaustauschvorrichtung (4) einzuschließen, **dadurch gekennzeichnet, dass**:

   - das Keramikmaterial des Kapselkörpers eine Verbindung aus einem nicht eisenhaltigen Element mit einer Dichte, die gleich oder größer als 4 g/cm$^3$ ist, enthält;
   - die relative Dichte des Körpers gleich oder größer als 3 ist;
   - das Gesamtgewicht der Kapsel im Bereich von 8 g bis 90 g liegt;
   - das effektive Gewicht der Kapsel im Bereich von 5 g bis 85 g liegt; und
   - die Kapsel länglich und zylindrisch geformt ist und leicht abgerundete Kanten besitzt, wobei der Durchmesser im Bereich von 8 mm bis 25 mm liegt und die Länge im Bereich von 30 mm bis 110 mm liegt.

2. Kapsel (1) nach Anspruch 1, **dadurch gekennzeichnet, dass** das Keramikmaterial des Körpers (2) Zirkonoxid (ZrO$_2$) enthält.

3. Kapsel (1) nach den Ansprüchen 1 und 2, **dadurch gekennzeichnet, dass** die Zusammensetzung im Zirkonoxid im Bereich von 30 Gew.-% bis 80 Gew.-% liegt und die relative Dichte im Bereich von 3,5 bis 4,0 liegt.

4. Kapsel (1) nach einem der vorhergehenden Ansprüche, **dadurch gekennzeichnet, dass** das Keramikmaterial, das den Körper (2) bildet, eine oder mehrere der folgenden Komponenten umfasst: Siliciumoxid im Bereich von 17 bis 50 Gew.-%; Magnesiumoxid im Bereich von 0,02 bis 0,05 Gew.-%; Aluminiumoxid im Bereich von 3 bis 6 Gew.-%; Calciumoxid im Bereich von 1,20 bis 2,60 Gew.-%; Kaliumoxid im Bereich von 0,12 bis 0,40 Gew.-%; Titanoxid im Bereich von 1,00 bis 3,20 Gew.-%; Natriumoxid im Bereich von 0,01 bis 0,03 Gew.-%; Eisenoxid im Bereich von 0,02 bis 0,15 Gew.-%; und Phosphoroxid im Bereich von 0,01 bis 0,03 Gew.-%.

5. Kapsel (1) nach Anspruch 1, **dadurch gekennzeichnet, dass** Verhältnis zwischen der Länge und dem Durchmesser der Kapsel im Bereich von 3 bis 6 liegt und vorzugsweise einen Wert in der Nähe von 4,5 hat.

6. Kapsel (1) nach einem der vorhergehenden Ansprüche 1 bis 5 für wiederkäuende Tiere, die mehr als etwa 25 kg wiegen, **dadurch gekennzeichnet, dass** die Länge des Körpers (2) im Bereich von 50 mm bis 110 mm liegt, der Durchmesser im Bereich von 12 mm bis 25 mm liegt; das Gesamtgewicht im Bereich von 40 g bis 90 g liegt; und das effektive Gewicht im Bereich von 35 g bis 85 g liegt.

7. Kapsel (1) nach einem der vorhergehenden Ansprüche 1 bis 5 für wiederkäuende Tiere, die weniger als etwa 25 kg wiegen, **dadurch gekennzeichnet, dass** die Länge des Körpers (2) im Bereich von 35 mm bis 75 mm liegt, der Durchmesser im Bereich von 8 mm bis 15 mm liegt; das Gesamtgewicht im Bereich von 8 g bis 50 g liegt und das effektive Gewicht im Bereich von 5 g bis 45 g liegt.

8. Kapsel (1) nach einem der vorhergehenden Ansprüche, **dadurch gekennzeichnet, dass** sie in ein elastisches Element (5) eingesetzt ist, das an wenigstens einer der abgerundeten Ecken des Körpers (2) angeordnet und durch eine Klammer (6) aus einem biologisch abbaubaren Material befestigt ist.

**Revendications**

1. Capsule (1) pour l'identification électronique de ruminants, adaptée pour être administrée par voie orale et pour aller se loger à l'intérieur du second estomac de l'animal (réticulum ou réticulo-rumen), ladite capsule comprenant un corps (2) fait en un matériau céramique résistant aux sucs gastriques de l'animal et pourvu d'une cavité (3) pour y loger un dispositif d'échange de données (4), **caractérisée en ce que** :

   - le matériau céramique du corps de la capsule comprend un composé d'un élément non ferreux d'une densité égale ou supérieure à 4 g/cm$^3$;
   - le poids spécifique dudit corps est égal ou supérieur à 3 ;
   - le poids total de la capsule est compris entre 8 g et 90 g ;

- le poids effectif de la capsule entre 5 g et 85 g ; et
- la capsule est de forme oblongue semblable à un cylindre avec des bords légèrement arrondis avec un diamètre compris entre 8 mm et 25 mm et une longueur comprise entre 30 mm et 110 mm.

2. Capsule (1) selon la revendication 1, **caractérisée en ce que** le matériau céramique du corps (2) comprend de l'oxyde de zirconium (Zr02).

3. Capsule (1) selon les revendications 1 et 2, **caractérisée en ce que** la composition dans l'oxyde de zirconium est comprise entre 30 % et 80 % en poids, et le poids spécifique entre 3,5 et 4,0.

4. Capsule (1) selon l'une quelconque des revendications précédentes, **caractérisée en ce que** le matériau céramique qui constitue le corps (2) comprend un ou plusieurs des composants suivants : oxyde de silicium de 17 % à 50 % en poids ; oxyde de magnésium de 0,02 % à 0,05 % en poids ; oxyde d'aluminium de 3 % à 6 % en poids ; oxyde de calcium de 1,20 % à 2,60 % ; oxyde de potassium de 0,12 % à 0,40 % en poids ; oxyde de titane de 1,00 % à 3,20 % en poids ; oxyde de sodium de 0,01 % à 0,03 % en poids ; oxyde de fer de 0,02 % à 0,15 % en poids ; et oxyde de phosphore de 0,01 % à 0,03 % en poids.

5. Capsule (1) selon la revendication 1, **caractérisée en ce que** le rapport entre la longueur et le diamètre de la capsule est compris entre 3 et 6 et, de préférence, d'une valeur proche de 4,5.

6. Capsule (1) selon l'une quelconque des revendications précédentes 1 à 5, destinée à des animaux ruminants qui pèsent plus de 25 kg environ, **caractérisée en ce que** la longueur du corps (2) est comprise entre 50 mm et 110 mm, le diamètre entre 12 mm et 25 mm ; le poids total entre 40 g et 90 g ; et le poids effectif entre 35 g et 85 g.

7. Capsule (1) selon l'une quelconque des revendications précédentes 1 à 5, destinée à des animaux ruminants qui pèsent moins de 25 kg environ, **caractérisée en ce que** la longueur du corps (2) est comprise entre 35 mm et 75 mm, le diamètre entre 8 mm et 15 mm ; le poids total est compris entre 8 g et 50 g ; et le poids effectif est compris entre 5 g et 45 g.

8. Capsule (1) selon l'une quelconque des revendications précédentes, **caractérisée en ce qu'**elle est équipée d'un élément élastique (5), arrangé dans au moins une des extrémités arrondies du corps (2) et assuré par un support (6) fait en un matériau biodégradable.

3

1

2

4

**FIG. 1**

5

5

6

2

1

**FIG. 2**

7

1

**FIG. 3**

**FIG. 4**

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0480530 A
- ES 2089556
- AU 649212
- ES 2140237

### Non-patent literature cited in the description

- **CAJA et al.** *Comp. Elec. Agric.,* 1999, vol. 24, 45-63
- **GARIN et al.** *J. Animal. Sci.,* 2002, vol. 81, 879-884
- *Rev. Sci. Tech. Off. Int. Epizoot.,* 2002, vol. 20, 480-490
- **GHIRARDI et al.** *ITEA: Prod. Animal,* 2003, vol. 24, 85-87